# EUROPÄISCHE PATENTSCHRIFT

(11) **EP 1 324 869 B1**
(45) Veröffentlichungstag und Bekanntmachung des Hinweises auf die Patenterteilung: **12.01.2005**
(21) Anmeldenummer: 01931319.6
(22) Anmeldetag: 30.05.2001
(51) Int. Cl.: B29C 47/10, B29C 47/40, B29C 47/76, B29C 47/82, B29C 47/84

(54) **MEHRWELLEN-EXTRUDER UND VERFAHREN ZUR AUFBEREITUNG UND/ODER VERARBEITUNG VON MIT FÜLLSTOFF VERSETZTEN ELASTOMEREN**
MULTI-SCREW EXTRUDER AND METHOD FOR TREATING AND/OR PROCESSING ELASTOMERS WITH ADDED FILLER
EXTRUDEUSE A PLUSIEURS VIS ET PROCEDE DE PREPARATION ET / OU DE TRAITEMENT D'ELASTOMERES A MATIERE DE CHARGE AJOUTEE

(30) Priorität: 10.10.2000 DE 10050295
(43) Veröffentlichungstag der Anmeldung: 09.07.2003
(73) Patentinhaber: Bühler AG, 9240 Uzwil (CH)
(72) Erfinder: STURM, Achim, Philipp, CH-9244 Niederuzwil (CH); INNEREBNER, Federico, CH-8049 Zürich (CH)
(74) Vertreter: Frommhold, Joachim, Dr.
(86) Internationale Anmeldenummer: PCT/CH2001/000336
(87) Internationale Veröffentlichungsnummer: WO 2002/030652

(56) Entgegenhaltungen:
- WO-A-99/50340
- US-A- 5 302 635
- US-A- 5 525 281

## Beschreibung

Die Erfindung bezieht sich auf einen Mehrwellen-Extruder gemäss Anspruch 1 und ein Verfahren gemäss Anspruch 21 zur Aufbereitung und/oder Verarbeitung eines mit Füllstoff versetzten Elastomers, insbesondere Kautschuk.

Zur Aufbereitung von Gummimischungen sind mehrstufige und diskontinuierliche Verfahrensschritte bekannt. Die Aufbereitung des Kautschuks erfolgt in Batchmischern mit 250-500 I Inhalt in ca. 2-3 minütigen Mischzyklen, meist in 2 Durchgängen. Die anschliessende Formgebung erfolgt entweder über Walzwerke (für Reifen) oder Extruder (für Profile etc.). Hohe Kosten für den Bau und die Einrichtung des Mischsaals sowie hohe Aufwendungen für dessen Betrieb erschweren es, die Produktionskosten zu senken.

Seit Jahren versucht die Gummiindustrie, die Verarbeitungsprozesse zu vereinfachen. Die kontinuierliche Aufbereitung von Gummi, wie sie z.B. in der thermoplastischen Kunststoffindustrie bekannt ist, wird seit Jahren als ein möglicher Lösungsansatz betrachtet. Man erhofft sich mit einem kontinuierlichen Verfahren folgende Hauptvorteile:
- Geringere Schwankungen (insbesondere Qualität) und Produktverluste
- Weitgehend automatisiertes Verfahren
- Geringer Energieverbrauch
- Geringere Emissionen.

Die kontinuierliche Aufbereitung von Gummi ist seit Jahren ein Wunsch der Gummiindustrie. Ein für die Kautschukaufbereitung angepasstes kontinuierliches Mischverfahren setzt eine kontinuierliche Dosierungsmöglichkeit aller Mischungskomponenten sowie eine exakte Dosierung dieser Bestandteile voraus. Bisher erschwerte die übliche Anlieferungsform von Kautschuk, wonach der Kautschuk (natürlich und synthetisch) in der Regel in Ballen angeliefert wird, eine wirtschaftliche kontinuierliche Aufbereitung. Pulverkautschuk ist schon lange bekannt, war bisher aber zu teuer. Neuere Entwicklungen, die ein wirtschaftliches Herstellen von Pulverkautschuk erlauben, eröffnen neue Möglichkeiten bei der kontinuierlichen Gummiaufbereitung.

So wird mit Füllstoff versetzter, Pulverkautschuk neuerdings durch Co-Fällung zwischen einer Kautschuk-Emulsion und einer Füllstoff-Suspension durch anschliessende Trocknung und Filterung gewonnen. Der auf diese Weise gewonnene Pulverkautschuk ist freifliessend und rieselfähig.

Derzeit bekannte Verfahren zum Mischen von Kautschuk verwenden im allgemeinen einen Innenmischer mit tangentialen oder ineinandergreifenden Knetwellen, ein Ausschneidewalzwerk mit Stockblender und/oder ein Batch-Off-Walzwerk zum Homogenisieren der gemischten Chargen und zum Schneiden der erhaltenen Mischungen zu Fellen oder zu Fütterstreifen, bevor die Abkühlung in der Batch-Off-Anlage erfolgt.

Alternativ verwendet man auch einen Austragsextruder und eine Roller-Die-Einrichtung.

Um eine gute Dispersion der Mischung zu garantieren, ohne dabei das Risiko einer zu starken Erwärmung oder eines Anspringens der Mischung einzugehen, ist beim Mischen in einzelnen Chargen häufig ein Zweistufenmischprozess erforderlich, insbesondere bei Mischungen mit höheren Härten oder hohen Werten der Mooney-Viskosität. Mischungen für Artikel mit niedrigen Härten erfordern, um eine gute Polymerdispersion zu gewährleisten, verlängerte Mischzeiten und ein Mischen in mehreren Durchgängen.

Der heutige Mischprozess ist kapitalintensiv und verursacht hohe Energie- und Betriebskosten. Ausserdem besteht dabei immer das Risiko schwankender Produktqualität, was nicht nur dadurch verursacht wird, dass grosse Kautschukballen mit Unterschieden in der Ballendichte eingesetzt werden, sondern ganz einfach dadurch, dass diese Arbeitsweise der Mischungsherstellung in einzelnen Chargen von ihrem Wesen her variabel ist und zudem eine Vielzahl von Prozessschritten einschliesst.

Der Innenmischer (oder Kneter) ist noch heute das zentrale Aggregat bei der Herstellung von Gummimischungen. Im Innenmischer rotieren zwei massive Mischschaufeln, deren Geometrie so ausgelegt ist, dass gleichzeitig eine axiale und radiale Verschiebung bzw. Durchmischung des Mischgutes stattfindet.
Konventionell laufen die Knetschaufeln mit unterschiedlicher Drehzahl, gegenläufig und bei modemen Innenmischer kämmend.

Innenmischer gibt es in Grössen von 1 Liter (Labormaschinen) bis zu 450 Liter (Reifenkneter). Letztere erstrecken sich über mehrere Stockwerke und erfordern Investitionen von mehreren Mio. Franken.

Die Einfüllöffnung liegt über dem Schaufelspalt. Sie wird während des Mischens mit einem hydraulischen betätigten Stempel verschlossen. Mit einem Stempeldruck von 2 bis 10 bar) wird das Mischgut in die eigentliche Mischkammer gedrückt und am Ausweichen gehindert. Die Mischungszeiten liegen typischerweise bei 2 Minuten.

Die Mischkammer enthält in der Wandung Bohrungen zur Kühlung. Die Knetschaufeln sind ebenfalls gebohrt zur Kühlung.

Die Entleeröffnung am Boden der Mischkammer wird durch sogenannte Schiebe- oder Klappsattel hydraulisch verschlossen. Die Öffnung wird beim Klappsattel rasch zur vollen Grösse freigegeben, wodurch eine schnelle Entleerung ermöglicht wird.

Der Antrieb von Innenmischern erfolgt durch Elektromotoren hoher Leistung von bis zu 10kW pro kg Nutzinhalt. Moderne Innenmischer sind in der Schaufeldrehzahl stufenlos regelbar.

Die Beschickung der Innenmischer erfolgt halbautomatisch durch eine sogenannte Vorschaltanlage. Rieselfähige Füllstoffe, wie z.B. Russ, werden aus Siliervorrichtungen (Container, Silo oder flexible Big-Bags) automatisch ausgetragen, abgewogen und in den Innenmischer gegeben. Oft wechselnde Kleinmengen und ballenförmige Kautschuke werden, nach der Zerkleinerung im Ballenschneider von Hand eingewogen. Die bei der Handverwiegung vorab abgewogenen Bestandteile werden in den Kneterschacht gegeben.

Nach dem Kautschuk werden die Füllstoffe und Additive gemeinsam zugegeben und zum Schluss die Flüssigkomponenten (Weichmacher) eingedüst.

Der Kautschuk wird in einer ersten Phase bei niedrigen Drehzahlen des Mischprozesses erwärmt und plastifiziert. Danach bei höheren Drehzahlen die Mischarbeit (distributiv und dispersiv) eingeleitet. Limitierender Faktor bei der Mischarbeit ist die Temperatur. Zur Überwachung und Steuerung des Mischprozesses werden Massetemperatur und Leistungsaufnahme des Kneterantriebs gemessen. Beide zusammen ergeben ein charakteristisches Bild, das von Zyklus zu Zyklus reproduziert werden muss, um gleichmässige Mischungseigenschaften zu erhalten. Die fertige Mischung fällt aus dem Innenmischer auf ein Ausmisch- oder Kühlwalzwerk mit Stockblender, wird dort als kontinuierliches Fell abgezogen und in der Batch-Off-Anlage gekühlt, mit Trennmittel versehen, getrocknet und am Schluss in Streifen geschnitten und auf Paletten gelegt.

Ein wichtiger Teilschritt bei der Verarbeitung von Elastomeren wie Kautschuk besteht darin, diese mit einem Füllstoff wie z.B. Russ oder Silikat zu versetzen. Mit diesem Füllstoff können die physikalischen Eigenschaften gezielt verändert werden. So kann z.B. bei Styrol-Butadien-Kautschuk oder bei Isopren-Kautschuk (Naturkautschuk) durch einen Massenanteil von etwa 50-60% Russ eine erhebliche Steigerung der Reissfestigkeit erzielt werden.

Bei diesem ersten Teilschritt ist es üblich, gewisse Verarbeitungshilfen einzusetzen. So wird Weichmacheröl bei der Verarbeitung des Kautschuks hinzugegeben, um die Mischungsviskosität und die Mischungselastizität zu senken. Dadurch lässt sich der Pulverkautschuk im Extruder leichter mastifizieren, und der Russ kann im Kautschuk besser dispergiert, d.h. zerteilt und verteilt werden.

Für die Gummiherstellung ist es notwendig, in einem weiteren Teilschritt die Kettenmoleküle des Kautschuks miteinander zu vernetzen. Hierfür verwendet man vorwiegend Schwefel. Alternativ verwendet man Kieselsäure, Metalloxide oder Peroxide. Bei gewissen Elastomeren kann die Vemetzung auch durch UV-Bestrahlung eingeleitet werden. Die Kettenmoleküle des Kautschuks werden dann durch Schwefelbrücken miteinander verbunden, wodurch hochelastisches Gummi entsteht.

Andere Zusätze dienen der Verbesserung der geforderten Produkt-Eigenschaften oder als Verarbeitungshilfsmittel, als Stabilisator, etc.

Bisherige Extrusionsvorgänge, wie sie z.B. aus den Dokumenten US 5302635, US 5525281 oder WO 99/50340 bekannt sind, erforderten immer noch einen hohen Energieaufwand, der mitunter auch zu einer thermischen Schädigung der zu verarbeitenden Stoffe führte.

Der Erfindung liegt daher die Aufgabe zugrunde, eine Verringerung des Energieaufwands bei der Aufbereitung und/oder Verarbeitung des mit Füllstoff versetzten Elastomers ohne nennenswerte Beeinträchtigung der Qualität des Endprodukts zu erreichen.

Diese Aufgabe wird nach der Erfindung durch den Mehrwellen-Extruder gemäss Anspruch 1 sowie das Verfahren gemäss Anspruch 21 gelöst.

Vorteilhafte Weiterbildungen der Erfindung sind Gegenstand der jeweiligen abhangigen Ansprüche.

Der Oberbegriff der Ansprüche 1 und 21 entspricht dem Offenbarungsgehalt der US 5302635.

Bei dem erfindungsgemässen Mehrwellen-Extruder ist zwischen dem Kamm der Knetelemente und der Gehäuse-Innenwand des Extruders ein Spalt mit einer Spaltbreite Z von 1/100 bis 1/10 des Knetelement-Durchmessers D vorhanden, wobei der Durchmesser als der maximale Durchmesser eines Knetelements von Kamm zu Kamm definiert ist.

Bei dem erfindungsgemässen Verfahren werden die die Knetelemente tragenden Wellen mit Drehzahlen in einem Bereich von 100 U/min bis 300 U/min betrieben.

Durch den erfindungsgemässen Spalt zwischen dem Kamm der Knetelemente (Knetscheiben) und der Gehäuse-Innenwand des erfindungsgemässen Extruders kann bei praktisch gleichbleibender Dispersion (d.h. Verteilungs- und Zerteilungsgrad) des Endprodukts am Extruderausgang je nach der Drehzahl der Schnecken und der gewählten Spaltbreite eine Verringerung des Schneckendrehmoments und damit des Energieaufwands bis zu etwa der Hälfte erzielt werden. Je nach Bedarf kann dafür gesorgt werden, dass die in radialer Richtung gemessene Spaltbreite des sich in Axialrichtung ererstreckenden Spalts zwischen den Knetelement-Kämmen und der Gehäuse-Innenwand des Extruders über die Breite eines Knetelements bzw. einer Knetscheibe hinweg als Funktion der axialen Position veränderlich ist oder dass diese Spaltbreite entlang der Axialrichtung über die gesamte Breite eines Knetelements konstant ist.

Vorzugsweise ist die Breite des Spalts und der Drehzahlbereich der die Knetelemente tragenden Wellen derart bemessen, dass Scherraten von etwa 10/s bis etwa 3000/s, insbesondere zwischen 30/s und 1000/s, erzielt werden.

Des weiteren kann durch einen sich senkrecht zur axialen Produktförderrichtung erstreckenden Spalt zwischen aufeinanderfolgenden Knetscheiben ein weiterer Beitrag zur Scherung des Produkts erzielt werden.

Zweckmässigerweise ist eine Dosiervorrichtung zur Eindosierung von Weichmacher und/oder Zusätzen im förderaufseiten Endbereich der Einfüllzone vorgesehen, wobei insbesondere eine Dosiervorrichtung zur Eindosierung von Weichmacher und/oder Zusätzen entlang der Produkt-Förderrichtung über mindestens einen Teilbereich der Einfüllzone verteilt vorgesehen sein kann. Vorzugsweise weist dann die Mastifizier/Plastifizierzone und/oder die Dispergierzone in ihrem förderabseitigen Bereich eine Entgasungsöffnung auf.

Bei einer weiteren vorteilhaften Ausführungsform weist die Einfüllzone oder der Förderbereich des Extruders eine Vorrichtung für die dosierte Zufuhr von Wasser auf. Dies ermöglicht eine Einarbeitung von Wasser in das Produkt und eine Kühlung nicht nur an dessen Oberfläche, sondern auch innerhalb des Produktvolumens, wodurch einer thermischen Produktschädigung wirkungsvoll vorgebeugt werden kann. Die wesentliche Kühlwirkung ergibt sich dabei vorwiegend aufgrund der Verdampfungswärme des durch die Entgasungsöffnungen entweichenden Wasserdampfs.

Zweckmässigerweise weisen die Mastifizier-/Plastifizierzone sowie die Dispergierzone jeweils eine Vielzahl (Knetblock) aneinandergesetzter Knetscheiben auf, deren Breite vorzugsweise im Bereich zwischen etwa 1/6 des Durchmessers und etwa 1 Durchmesser der Knetscheiben liegt. Dieser stapelartige Aufbau eignet sich besonders gut für Schnecken, die häufig an verschiedene Betriebsbedingungen angepasst werden müssen. Der Knetscheibenstapel kann aber auch einstückig z.B. durch Giessen oder durch maschinelles Bearbeiten gebildet werden.

Die aneinandergesetzten Knetscheiben können dabei um 90° zueinander versetzt oder um weniger als 90° in der Drehrichtung oder gegen die Drehrichtung versetzt angeordnet sein. Dadurch erreicht man eine neutrale Knetwirkung ohne Förderkomponente bzw. eine Knetwirkung mit überlagerter ruckfördernder oder fördernder Komponente. Durch geeignete Auswahl dieser Konfigurationen können z.B. mehr oder weniger intensive Mastifizierungen und Dispergierungen, insbesondere aber auch gezieltes Aufstauen und Druckaufbau vor Entgasungsöffnungen erreicht werden.

Vorzugsweise verwendet man innerhalb eines Knetblocks des Mastifizierabschnitts und/oder des Dispergierabschnitts einer Schnecke Knetscheiben, deren Kamm-zu-Kamm-Durchmesser entlang der Förderrichtung abnimmt (zunehmende Spaltbreite) oder zunimmt (abnehmende Spaltbreite). So kann in der jeweiligen Zone ebenfalls fördernd bzw. rückfördern, d.h. stauend, auf das Produkt eingewirkt werden.

Zweckmässigerweise ist die Einfüllzone mindestens so lang wie die Summe der Längen der Mastifizier-/Plastifizierzone und der Dispergierzone und weist vorteilhafterweise distributive bzw. nicht dichtkämmende Elemente auf. Dies ermöglicht es, die Produktkomponenten zunächst gut zu verteilen, ohne dabei einen grossen Betrag an dispersiver Arbeit (Zerteilung) einzuführen. Vor allem wird durch die distributiv mischende lange Einfüllzone auch dem Weichmacher genügend Zeit gegeben, zunächst gut verteilt zu werden und in das Elastomer einzudiffundieren.

Als Mehrwellen-Extruder kann z.B. ein Ringtextruder verwendet werden, der sowohl eine Gehäuse- als auch eine Kernkühlung aufweist. Dies ermöglicht eine besonders wirkungsvolle Kühlung des Produktes, da sowohl innerhalb der ringförmigen Bearbeitungszone des Extruders als auch ausserhalb davon Wärme abgeführt wird. Der Ringtextruder, insbesondere als gleichdrehender dichtkämmender Mehrwellenextruder, bietet deutliche Vorteile gegenüber dem Zweiwellen-Extruder. Mit dem Ringtextruder können die Erfinder der vorliegenden Anmeldung für die kontinuierliche Gummiaufbereitung eine einzigartige, besonders vorteilhafte Lösung für die Aufbereitung von Kautschuk anbieten, wobei die folgenden fünf Hauptkriterien zu erfüllen sind:
- optimale Mischverteilung (distributives Mischen)
- kleine Partikel und schmale Partikelgrössenverteilung (dispersives Mischen)
- keine thermische Schädigung durch Zeit-Temperatur-Geschichte)
- niedriger Energieverbrauch
- Gasfreiheit

Aufgrund der höheren spezifischen Grössen wie Zylinderoberfläche und Zwickelfläche lassen sich diese Kriterien mit dem Ringtextruder effizienter erreichen als mit einem konventionellen Zweiwellen-Extruder.

Insbesondere das dispersive Mischen lässt sich mit dem Ringtextruder um Faktoren schneller und schonender erzielen. Die Gründe liegen in seinem kleineren Passiwolumen, seiner engeren Zielgrössenverteilung und seiner grösseren spezifischen Wärmeübertragungsfläche.

Somit eignet sich speziell der Ringtextruder als kontinuierlich arbeitende Maschine zur Gummi-Aufbereitung.

Zweckmässigerweise enthält der Extruder an seinem förderabseitigen Ende noch eine Formgebungseinrichtung, insbesondere mit einem vorgeschalteten Austragsapparat. So kann z.B. in einer Linie Pulverkautschuk zu einem geformten Endprodukt verarbeitet werden.

Durch Betreiben der die Knetelemente tragenden Wellen derart, dass Scherraten von etwa 10/s bis etwa 3000/s, insbesondere zwischen 30/s und 1000/s, zwischen den Kämmen der Knetelemente und der Gehäuse-Innenwand erzielt werden, wird gewährleistet, dass genügend Scherwirkung vorhanden ist, um eine ausreichende Mastifizierung und Dispergierung in den entsprechenden Zonen zu erzielen.

Das am Ausgang des Extruders erhaltene Produkt ist eine fliessfähige zusammenhängende Mischung, welche vorwiegend Elastomer (z.B. Kautschuk) sowie Füllstoff (z.B. Russ oder Silikat) und Weichmacher (Öl) enthält. Dabei stellt das Elastomer die kontinuierliche (zusammenhängende) Phase und der ver- und zerteilte Füllstoff die diskontinuierliche Phase des Gemisches dar.

Zweckmässigerweise werden der Weichmacher und/oder die Zusätze im förderaufseiten Endbereich der Einfüllzone eindosiert, sie können aber auch bei bedarf entlang der Produkt-Förderrichtung über mindestens einen Teilbereich der Einfüllzone verteilt eindosiert werden.

Alternativ können der Weichmacher und/oder die Zusätze in einem förderabseitigen Teilbereich der Einfüllzone eindosiert werden.

Vorzugsweise wird im Bereich der Mastifizier-/Plastifizierzone und/oder der Dispergierzone entgast, insbesondere auch für den Fall, dass im Bereich der Einfüllzone dosiert Wasser hinzugefügt wird.

Verwendet man speziell einen Ringtextruder, so werden vorzugsweise sowohl das Gehäuse als auch der Kern des Mehrwellen-Extruders gekühlt.

Zweckmässigerweise wird am förderabseitigen Ende des Extruders das Produkt ausgetragen und anschliessend einer Formgebung ausgesetzt.

Vorzugsweise verwendet man ein Elastomer-Ausgangsmaterial (Pulverkautschuk), bei dem Teile der Zusätze und/oder Weichmacher (Russ) bereits enthalten sind und deren Dispergierung im Elastomer dann durch das erfindungsgemässe Verfahren erhöht wird.

Weitere Vorteile, Merkmale und Anwendungsmöglichkeiten der Erfindung ergeben sich aus der nun folgenden Beschreibung eines erfindungsgemässen Ausführungsbeispiels anhand der Zeichnung, wobei:
- Fig. 1: eine schematische Seitenansicht des erfindungsgemässen Extruders ist;
- Fig. 2a und 2b: jeweils eine schematische Darstellung der verschiedenen Zonen der Extruderschnecken für zwei verschiedene Varianten ist;
- Fig. 3a und 3b: eine Seitenansicht bzw. eine axiale Ansicht eines erfindungsgemässen Knetblocks aus zwei Knetelementen sind;
- Fig. 4: ein Diagramm ist, das den Zusammenhang zwischen Spaltbreite bzw. Knetscheiben-Durchmesser und erforderlichem Schnecken-Drehmoment zeigt; und
- Fig. 5: ein Schnitt durch einen die erfindungsgemässen Knetscheiben aufweisenden Extruder senkrecht zu seiner Längsachse ist.

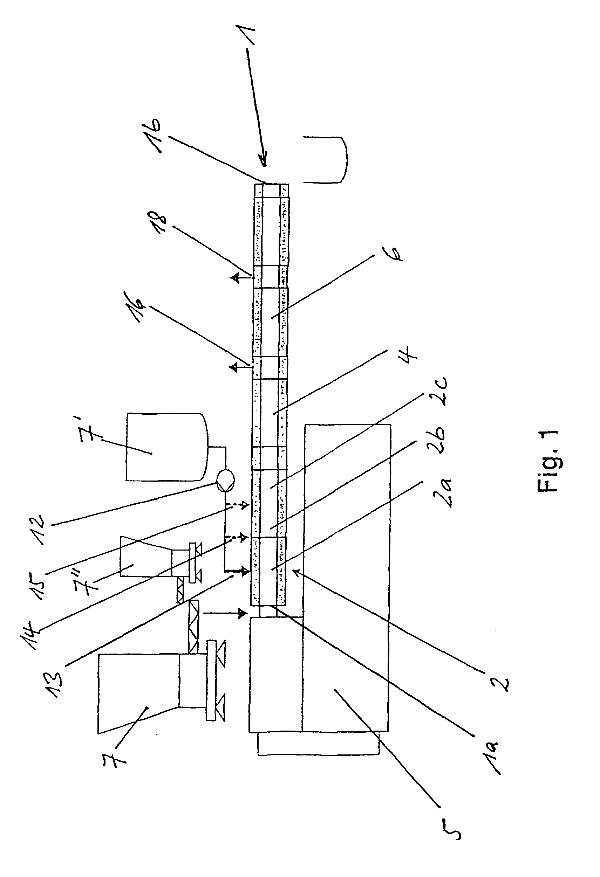

Fig. 1 zeigt einen erfindungsgemässen Extruder in einer schematischen Seitenansicht. In dem Extruder wird mit einem Füllstoff wie Russ oder Silikat versetzter Elastomer, z.B. Pulverkautschuk, aufbereitet oder verarbeitet mit dem Ziel, die Russpartikel im Pulverkautschuk zu zerkleinern und gleichmässig zu verteilen. Die Dispersion (Grad der Zerkleinerung und Verteilung der Russpartikel) ist ein Gütemerkmal des Endprodukts.

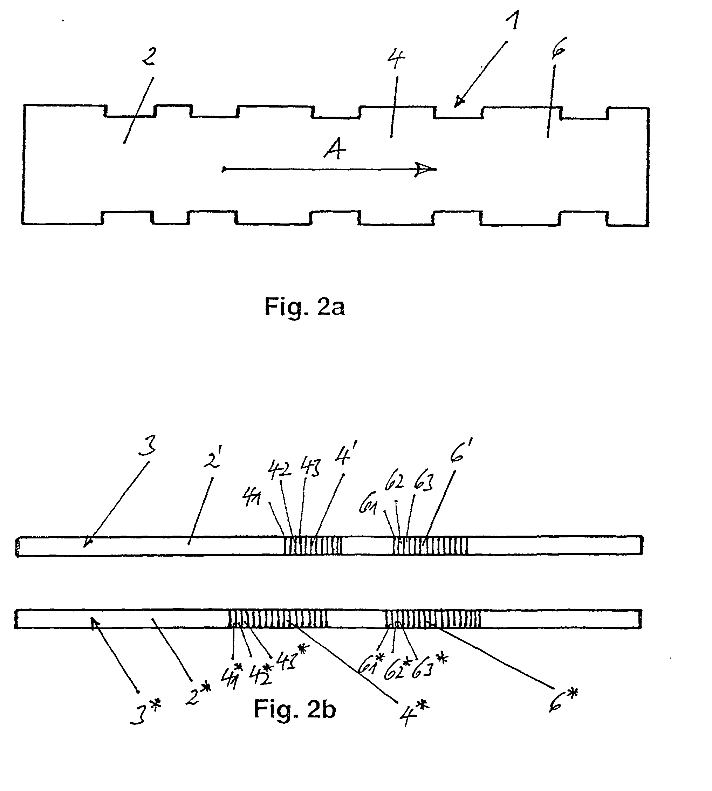

Der Extruder besitzt ein Gehäuse 1, das ein Paar Schnecken 3 oder ein Paar Schnekken 3' (siehe Fig. 2) enthält. Die Schnecken 3 oder 3* werden von einem Motor/Getriebe-Block 5 des Extruders angetrieben. Das Extrudergehäuse 1 enthält in der Förderrichtung (von links nach rechts) der Reihe nach eine Einfüllzone 2, eine Mastifizierzone 4 und eine Dispergierzone 6. Der Pulverkautschuk wird aus einem Vorratsgefäss 7 dem Extrudergehäuse 1 an seinem förderaufseitigen Ende 1a zugeführt.

Weichmacher, wie z.B. Öl, wird aus dem Vorratsbehälter 7' über eine Dosiereinheit 12 und eine Dosierleitung 13 dem förderaufseitigen Teilbereich 2a der Einfüllzone 2 zugeführt. Alternativ kann der Weichmacher auch über die Einfüllzone 2 verteilt zugeführt werden, und zwar mittels der Dosierleitungen 13, 14 und 15 jeweils im förderaufseitigen, mittigen und förderabseitigen Teilbereich 2a, 2b, 2c der Einfüllzone 2.

In der Mastifizierzone 4 und der Dispergierzone 6 wird das Produkt im Extrudergehäuse 1 einer Scherwirkung und Durchmischung ausgesetzt, um die Russ- oder Silikat-Partikel zu zerkleinern und zu verteilen, wobei die Verteilung vorwiegend in der Mastifizierzone 4 und die Zerkleinerung vorwiegend in der Dispergierzone 6 stattfindet. Aus einem weiteren Vorratsbehälter 7" können Zusätze oder auch Wasser dosiert hinzugefügt werden. Im Bereich der Mastifizierzone 4 und der Dispergierzone 6 besitzt das Extrudergehäuse 1 jeweils eine Entgasungsöffnung 16 bzw. 18, durch die das zudosierte Wasser und ggf. der Weichmacher aus dem Produkt entfernt werden, bevor dieses das Extrudergehäuse 1 an dessen förderabseitigen Ende 1b verlässt.

Fig. 2a ist eine schematische Ansicht des Extrudergehäuses 1 mit seiner Einfüllzone 2, seiner Mastifizierzone 4 und seiner Dispergierzone 6. Die Produktförderrichtung ist durch den Pfeil A gekennzeichnet.

Fig. 2b zeigt schematisch zwei Varianten von Schnecken 3 bzw. 3*, von denen im Extrudergehäuse 1 zumindest zwei parallel zueinander und teilweise ineinandergreifend angeordnet sind.

Die Schnecke 3 (erste Variante) besteht in der Förderrichtung der Reihe nach aus einem Einfüllabschnitt 2', einem Mastifizierabschnitt 4' und einem Dispergierabschnitt 6'. Der Einfüllabschnitt bzw. Förderabschnitt 2' der Schnecke 3 besitzt nicht-kämmende distributive Elemente. Hier findet eine Förderung und gleichzeitig eine erste Vermischung des Produkts statt. In dem darauffolgenden Mastifizierabschnitt 4' befinden sich einerseits fördernde und in dem Produkt Druck aufbauende Schneckenelemente mit abnehmender Ganghöhe (nicht gezeigt) sowie Knetblöcke, die aus aneinandergereihten Knetscheiben 41, 42, 43, etc. bestehen und in erster Linie scherend auf das Produkt einwirken. In dem darauffolgenden Dispergierabschnitt 6' befinden sich ebenfalls einerseits fördernde Schneckenelemente mit abnehmender Ganghöhe (nicht gezeigt) sowie Knetblöcke, die aus aneinandergereihten Knetscheiben 61, 62, 63, etc. bestehen (schematisch gezeigt). Die Wirkung dieser Schneckenelemente und Knetblöcke ist hier ähnlich wie im vorhergehenden Abschnitt 4'.

Die Schnecke 3* (zweite Variante) ist ähnlich aufgebaut wie die Schnecke 3, besitzt jedoch einen kürzeren Einfüllabschnitt 2*, einen längeren Mastifizierabschnitt 4* und einen längeren Dispergierabschnitt 6*. Insbesondere besitzen die Knetblöcke der Abschnitte 4* und 6* eine grössere Anzahl Knetscheiben 41*, 42*, 43*, etc. bzw. 61*, 62*, 63*, etc..

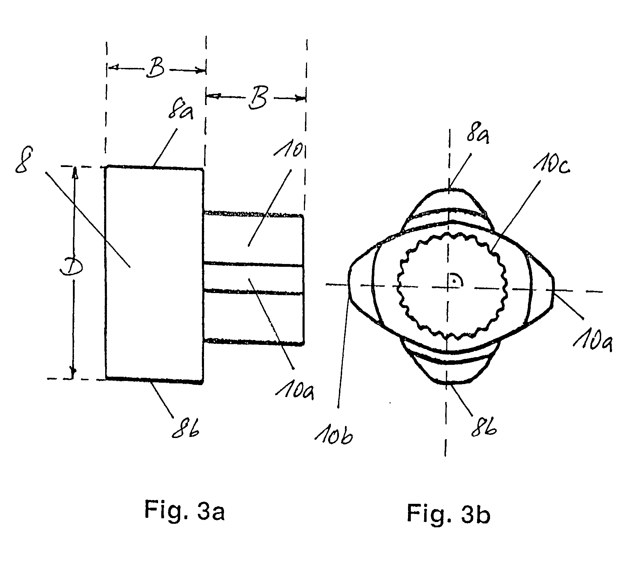

Sowohl bei der Schnecke 3 als auch bei der Schnecke 3* ist zwischen den Kämmen 8a, 8b, 10a, 10b der Knetscheiben 8, 10 (siehe Fig. 3a, 3b) und der Gehäuse-Innenwand 9 des Extrudergehäuses 1 ein Spalt vorhanden, dessen Spaltbreite Z im Bereich von etwa 1/100 bis etwa 1/10 des Knetscheiben-Durchmessers D liegen kann.

Bei der Schnecke 3 enthält der Mastifizierabschnitt 4' einen Knetblock, der in seinem förderaufseitigen Bereich um 90° versetzt montierte (neutrale) Knetscheiben und in seinem förderabseitigen Bereich um weniger als 90° in der Drehrichtung versetzt montierte (rückfördemde) Knetscheiben aufweist, während der Knetblock des Dispergierabschnitts 6' nur neutrale Knetscheiben aufweist.

Bei der Schnecke 3* enthält der Mastifizierabschnitt 4* einen Knetblock, der in seinem förderaufseitigen Bereich um weniger als 90° entgegen der Drehrichtung versetzt montierte (fördernde) Knetscheiben und in seinem förderabseitigen Bereich um weniger als 90° in der Drehrichtung versetzt montierte (rückfördernde) Knetscheiben aufweist, während der Knetblock des Dispergierabschnitts 6* nur neutrale Knetscheiben aufweist. Im Gegensatz zur Schnecke 3 haben hier aber die Knetblöcke des Mastifizierabschnitts 4* als auch des Dispergierabschnitts 6* jeweils in ihrem förderaufseiten Bereich Knetscheiben mit grösserem Durchmesser als im förderabseitigen Bereich, d.h., die Spaltbreite zwischen den Kämmen der Knetscheiben und der Gehäuse-Innenwand nimmt entlang der Produktförderrichtung zu. Diese Konfiguration wirkt ebenfalls fördernd.

Fig. 3a zeigt einen Knetblock in radialer Richtung betrachtet, der aus zwei Knetscheiben 8, 10 besteht, die um 90° um die Schneckenachse verdreht angeordnet sind. Die Breite B der Knetscheiben 8, 10 ist etwa die Hälfte des Durchmessers D der Knetscheiben, wobei der Durchmesser als "maximaler Durchmesser" einer Knetscheibe 8, 10 von Kamm 8a zu Kamm 8b bzw. von Kamm 10a zu Kamm 10b aufzufassen ist.

Fig. 3b zeigt den Knetblock der Fig. 3a in axialer Richtung betrachtet. Hier erkennt man die Innenverzahnung 10c, mit der die Knetscheiben 8, 10 formschlüssig und um eine bestimmte Zahl von Zähnen in Umfangsrichtung versetzt auf komplementäre Aussenverzahnungen der Schneckenwellen (nicht gezeigt) montiert werden können.

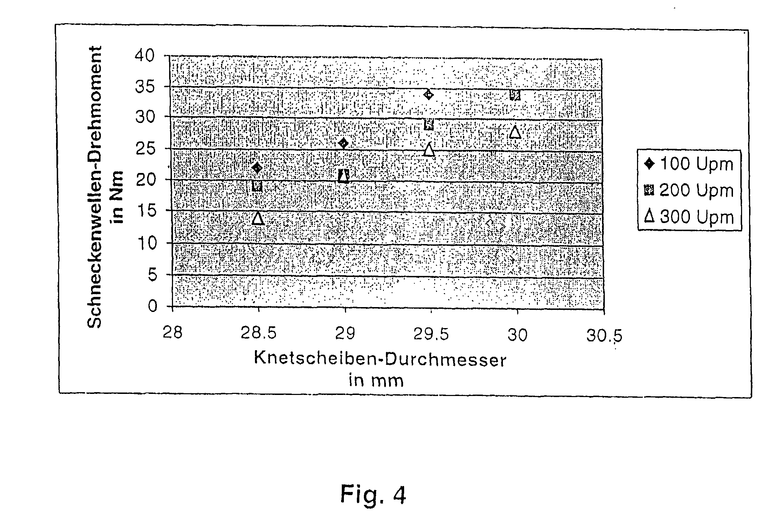

Fig. 4 zeigt den Zusammenhang zwischen Spaltbreite bzw. Knetscheiben-Durchmesser und erforderlichem Schnecken-Drehmoment. Man erkennt, dass mit abnehmendem Knetscheiben-Durchmesser D, d.h., mit zunehmender Spaltbreite Z zwischen den Knetscheiben-Kämmen und der Gehäuse-Innenwand, das notwendige Schneckenwellen-Drehmoment und damit die aufzubringende Energie abnimmt. Überraschenderweise blieb die Dispersion des Endprodukts praktisch unverändert.

Eine geringfügige Abhängigkeit des Schneckenwellen-Drehmoments von der Drehzahl ist ebenfalls ersichtlich. Im Bereich von 100 U/min bis 300 U/min nimmt das erforderliche Drehmoment mit steigender Drehzahl ab. So konnte z.B. bei einer Drehzahl von 300 U/min durch Verringerung des Knetscheiben-Durchmessers D um 1,5 mm, d.h., durch Erhöhung der Spaltbreite Z um 0,75 mm über jedem Kamm der Knetscheibe, eine Verringerung des Schneckenwellen-Drehmoments von 28 Nm auf 15 Nm gemessen werden.

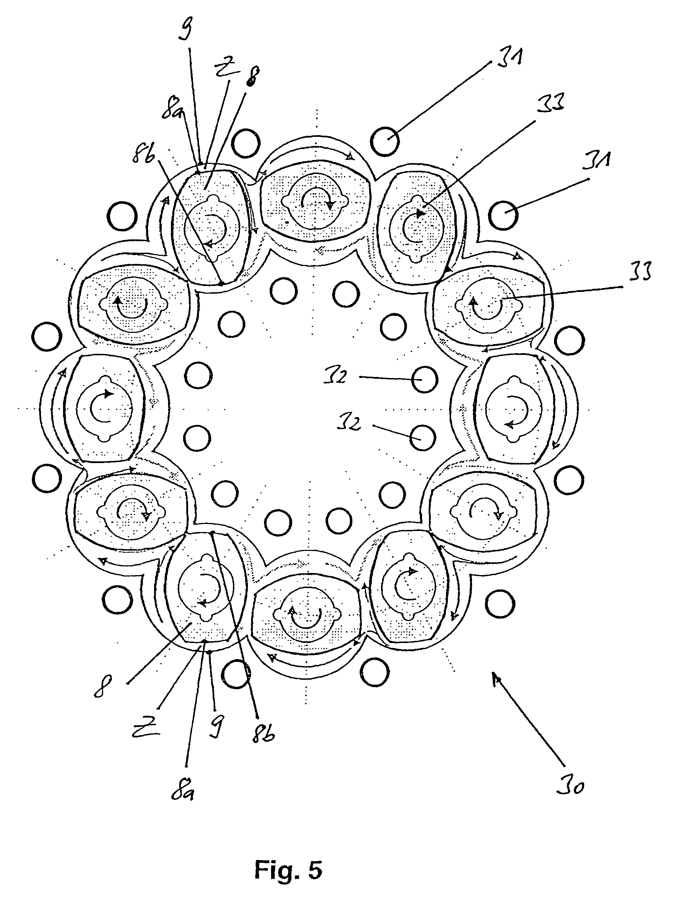

Fig. 5 zeigt einen Schnitt durch einen die erfindungsgemässen Knetscheiben 8 aufweisenden Ringtextruder 30 senkrecht zu seiner Längsachse. Er enthält zwölf gleichsinnig drehende Schneckenwellen 33. In der Schnittebene befindet sich jeweils eine auf der jeweiligen Schneckenwelle 33 montierte Knetscheibe 8, deren Kämme 8a, 8b mit der Gehäuse-Innenwand 9 des Extruders 30 einen Spalt der Spaltbreite Z bilden, der etwa 1/10 des Knetscheiben-Durchmessers D beträgt. Der Extruder 30 hat sowohl eine innenliegende Kemkühlung 32 als auch eine aussenliegende Gehäusekühlung 31.

### Bezugszeichenliste

- 1: Extrudergehäuse
- 1a,1b: förderaufseitiges, förderabseitiges Ende
- 2: Einfüllzone/Förderzone (auf Gehäuse 1 bezogen)
- 2a, 2b, 2c: förderaufseitiger, mittiger, förderabseitiger Teilbereich
- 3, 3*: Schneckenwelle
- 4: Mastifizierzone (auf Gehäuse 1 bezogen)
- 5: Motor/Getriebe-Block
- 6: Dispergierzone (auf Gehäuse 1 bezogen)
- 2', 2*: Einfüllabschnitt (auf Schnecke 3, 3* bezogen)
- 4',4*: Mastifizierabschnitt (auf Schnecke 3, 3* bezogen)
- 6', 6*: Dispergierabschnitt (auf Schnecke 3, 3* bezogen)
- 7, 7',7": Vorratsgefäss
- 8, 10: Knetelement/Knetscheibe
- 8a, 8b, 10a, 10b: Kamm
- 9: Gehäuse-Innenwand
- 8c, 10c: Innenverzahnung
- 12: Dosiereinheit
- 13,14,15: Dosierleitung
- 12,13,14,15: Dosiervorrichtung
- 16,18: Entgasungsöffnung
- 41, 42, 43,...: Mastifizier-Knetscheiben (=Knetblock) auf Schneckenwelle 3
- 61, 62, 63,...: Dispergier-Knetscheiben (=Knetblock) auf Schneckenwelle 3
- 41*, 42*, 43*,...: Mastifizier-Knetscheiben (=Knetblock) auf Schneckenwelle 3*
- 61*, 62*, 63*,...: Dispergier-Knetscheiben (=Knetblock) auf Schneckenwelle 3*
- 30: Ringtextruder
- 31: Gehäusekühlung
- 32: Kemkühlung

## Patentansprüche

1. Mehrwellen-Extruder mit mindestens zwei Wellen zur Aufbereitung und/oder Verarbeitung eines mit Füllstoff versetzten Elastomers, insbesondere Kautschuk, mit mindestens einem Weichmacher und/oder Zusätzen, wobei der Extruder in der Richtung des Produkttransports aufeinanderfolgend aufweist:
- eine Einfüllzone (2), in welcher das Elastomer sowie der Weichmacher und/oder die Zusätze eindosiert wird bzw. werden;
- eine Mastifizier-/Plastifizierzone (4) mit mindestens einem Knetelement (8, 10), in welcher das Elastomer mit dem Weichmacher und/oder den Zusätzen in eine fliessfähige zusammenhängende Mischung (Compound) überführt wird; und
- eine Dispergierzone (6) mit mindestens einem weiteren Knetelement (8,10), in welcher der Füllstoff in dem Elastomer zerkleinert und verteilt wird,
**dadurch gekennzeichnet, dass**
- zwischen dem Kamm (8a, 8b, 10a, 10b) der Knetelemente (8,10) und der Gehäuse-Innenwand (9) des Extruders ein Spalt mit einer Spaltbreite Z von 1/100 bis 1/10 des Knetelement-Durchmessers D vorhanden ist, wobei der Durchmesser als der maximale Durchmesser eines Knetelements (8, 10) vom Kamm (8a, 10a) zu Kamm (8b, 10b) definiert ist.

2. Extruder nach Anspruch 1, **dadurch gekennzeichnet, dass** er in einem Drehzahlbereich von etwa 100 umdrehungen pro Minute bis 300 umdrehungen pro Minute betreibbar ist.

3. Extruder nach Anspruch 1 oder 2, **dadurch gekennzeichnet, dass** eine Dosiervorrichtung (12, 13) zur Eindosierung von Weichmacher und/oder Zusätzen im förderaufseiten Endbereich (2a) der Einfüllzone (2) vorgesehen ist.

4. Extruder nach einem der Ansprüche 1 bis 3, **dadurch gekennzeichnet, dass** eine Dosiervorrichtung (12, 13, 14, 15) zur Eindosierung von Weichmacher und/oder Zusätzen entlang der Produkt-Förderrichtung über mindestens einen Teilbereich (2a, 2b, 2c) der Einfüllzone (2) verteilt vorgesehen ist.

5. Extruder nach einem der vorhergehenden Ansprüche, **dadurch gekennzeichnet, dass** die Mastifizier-/Plastifizierzone (4) und/oder die Dispergierzone (6) jeweils eine Entgasungsöffnung (16, 18) aufweisen.

6. Extruder nach Anspruch 5, **dadurch gekennzeichnet, dass** die Einfüllzone (2) oder der Förderbereich eine Vorrichtung für die dosierte Zufuhr von Wasser aufweist.

7. Extruder nach einem der vorhergehenden Ansprüche, **dadurch gekennzeichnet, dass** die Mastifizier-/Plastifizierzone (4) sowie die Dispergierzone (6) jeweils einen Knetblock aus einer Vielzahl in axialer Richtung aneinandergesetzter Knetscheiben (41, 42, 43, ... bzw. 61, 62, 63, ...) aufweisen.

8. Extruder nach Anspruch 7, **dadurch gekennzeichnet, dass** die Breite B der Knetscheiben im Bereich zwischen etwa 1/6 des Durchmessers D und etwa 1 Durchmesser D der Knetscheiben (41, 42, 43, ...., 61, 62, 63, ...) liegt.

9. Extruder nach Anspruch 7 oder 8, **dadurch gekennzeichnet, dass** die aneinandergesetzten Knetscheiben (41, 42, 43, ... bzw. 61, 62, 63, ...) jeweils um 90° zueinander versetzt sind.

10. Extruder nach Anspruch 7 oder 8, **dadurch gekennzeichnet, dass** die aneinandergesetzten Knetscheiben um weniger als 90° in der Drehrichtung versetzt (rückfördernd) oder um weniger als 90° gegen die Drehrichtung versetzt (fördernd) angeordnet sind.

11. Extruder nach einem der Ansprüche 7 bis 10, **dadurch gekennzeichnet, dass** der maximale Durchmesser D der Knetscheiben (41, 42, 43, ...; 41*, 42*, 43*,...) des Mastifizierabschnitts (4'; 4*) entlang der Produktförderrichtung abnimmt.

12. Extruder nach einem der Ansprüche 7 bis 11, **dadurch gekennzeichnet, dass** der maximale Durchmesser D der Knetscheiben (61, 62, 63, ...; 61*, 62*, 63*, ...) des Dispergierabschnitts (6'; 6*) entlang der Produktförderrichtung abnimmt.

13. Extruder nach einem der Ansprüche 7 bis 10 oder nach Anspruch 12, **dadurch gekennzeichnet, dass** der maximale Durchmesser D der Knetscheiben (41, 42, 43, ...; 41*, 42*, 43*,...) des Mastifizierabschnitts (4'; 4*) entlang der Produktförderrichtung zunimmt.

14. Extruder nach einem der Ansprüche 7 bis 11 oder nach Anspruch 13, **dadurch gekennzeichnet, dass** der maximale Durchmesser D der Knetscheiben (61, 62, 63, ...; 61*, 62*, 63*, ...) des Dispergierabschnitts (6'; 6*) entlang der Produktförderrichtung zunimmt.

15. Extruder nach einem der vorhergehenden Ansprüche, **dadurch gekennzeichnet, dass** der Durchmesser jeweils einer Knetscheibe (41, 42, 43, ...; 41*, 42*, 43*,...; 61, 62, 63, ...; 61*, 62*, 63*, ...) entlang deren Breite an verschiedenen axialen Positionen unterschiedlich ist.

16. Extruder nach einem der vorhergehenden Ansprüche, **dadurch gekennzeichnet, dass** die Einfüllzone (2) oder der Förderbereich mindestens so lang wie die Summe der Längen der Mastifizier-/Plastifizierzone (4) und der Dispergierzone (6) ist.

17. Extruder nach einem der vorhergehenden Ansprüche, **dadurch gekennzeichnet, dass** die Einfüllzone (2) distributive Elemente aufweist.

18. Extruder nach einem der vorhergehenden Ansprüche, **dadurch gekennzeichnet, dass** der Mehrwellen-Extruder ein Ringtextruder (30) ist, der sowohl eine Gehäuse- als auch eine Kernkühlung (31, 32) aufweist.

19. Extruder nach einem der vorhergehenden Ansprüche, **dadurch gekennzeichnet, dass** der Extruder an seinem förderabseitigen Ende eine Formgebungseinrichtung aufweist.

20. Extruder nach Anspruch 19, **dadurch gekennzeichnet, dass** zwischen dem förderabseitigen Extruderende und der Formgebungsvorrichtung ein Austragsapparat vorgesehen ist.

21. Verfahren zur Aufbereitung und/oder Verarbeitung eines mit Füllstoff versetzten Elastomers, insbesondere Kautschuk, mit einem Weichmacher und/oder Zusätzen, mittels eines Extruders nach einem der Ansprüche 1 bis 20, wobei das Verfahren die folgenden Schritte aufweist:
- Eindosieren des Elastomers sowie des Weichmachers und/oder der Zusätze;
- Mastifizieren/Plastifizieren des Produkts mit mindestens einem Knetelement, wobei das Elastomer mit dem Weichmacher und/oder den Zusätzen in den Zustand einer fliessfähigen zusammenhängenden Mischung gebracht wird; und
- Dispergieren des Produkts mit mindestens einem weiteren Knetelement, wobei der Füllstoff in dem Elastomer zerkleinert und verteilt wird,
**gekennzeichnet durch**
- Betreiben der die Knetelemente tragenden Wellen mit Drehzahlen in einem Bereich von 100 umdrehungen pro Minute bis 300 umdrehungen pro Minute.

22. Verfahren nach Anspruch 21, **dadurch gekennzeichnet, dass** der Weichmacher und/oder die Zusätze in einem förderaufseiten Endbereich (2a) der Einfüllzone (2) eindosiert werden.

23. Verfahren nach Anspruch 21, **dadurch gekennzeichnet, dass** der Weichmacher und/oder die Zusätzen entlang der Produkt-Förderrichtung über mindestens einen Teilbereich (2a, 2b, 2c) der Einfüllzone (2) verteilt eindosiert werden.

24. Verfahren nach Anspruch 23, **dadurch gekennzeichnet, dass** der Weichmacher und/oder die Zusätze in einem förderabseitigen Teilbereich (2c) der Einfüllzone (2) eindosiert werden.

25. Verfahren nach einem der Ansprüche 21 bis 24, **dadurch gekennzeichnet, dass** im Bereich der Mastifizier-/Plastifizierzone (2) und/oder der Dispergierzone (4) entgast wird.

26. Verfahren nach einem der Ansprüche 21 bis 25, **dadurch gekennzeichnet, dass** im Bereich der Einfüllzone (2) dosiert Wasser hinzugefügt wird.

27. Verfahren nach einem der Ansprüche 21 bis 26 unter Verwendung eines Extruders nach Anspruch 18, **dadurch gekennzeichnet, dass** sowohl das Gehäuse als auch der Kern des Mehrwellen-Extruders (30) gekühlt werden.

28. Verfahren nach einem der Ansprüche 21 bis 27, **dadurch gekennzeichnet, dass** am förderabseitigen Ende des Extruders das Produkt ausgetragen wird.

29. Verfahren nach Anspruch 28, **dadurch gekennzeichnet, dass** nach dem Austragen des Produktes eine Formgebung des Produktes stattfindet.

30. Verfahren nach einem der Ansprüche 21 bis 29, **dadurch gekennzeichnet, dass** Teile der Zusätze und/oder Weichmacher bereits im aufzubereitenden bzw. zu verarbeitenden Elastomer integriert sind.

## Claims

1. Multi-screw extruder with at least two screws for preparing and/or processing an elastomer, in particular rubber, reacted with filler, having at least one softener and/or additives, wherein the extruder has the following in sequence in the direction of product transport:
- a fill-in zone (2) into which the softener and/or additives is/are metered;
- a mastification/plasticization zone (4) with at least one kneading element (8, 10), in which the elastomer with the softener and/or additives is converted to a free-flowing, coherent mixture (compound) ; and
- a dispersion zone (6) with at least one additional kneading element (8, 10), in which the filler is comminuted and distributed in the elastomer,
**characterized in that**
- a gap with a width Z of 1/100 to 1/10 of the kneading element diameter D is provided between the comb (8a, 8b, 10a, 10b) of the kneader elements (8, 10) and the casing inner wall (9) of the extruder, wherein the diameter is defined as the maximum diameter of a kneading element (8, 10) from comb (8a, 10a) to comb (8b, 10b).

2. Extruder according to claim 1, **characterized in that** it can be operated at speeds of about 100 to 300 RPM.

3. Extruder according to claim 1 or 2, **characterized in that** a metering device (12, 13) for metering in softener and/or additives is provided in the upstream conveying end area (2a) of the fill-in zone (2).

4. Extruder according to one of claims 1 to 3, **characterized in that** a metering device (12, 13, 14, 15) for metering in softener and/or additive sis provided along the product conveying direction distributed over at least a partial area (2a, 2b, 2c) of the fill-in zone (2).

5. Extruder according to one of the preceding claims, **characterized in that** the mastification/plasticization zone (4) and/or the dispersion zone (6) each have a degassing hole (16, 18).

6. Extruder according to claim 5, **characterized in that** the fill-in zone (2) or the conveying area has a device for the metered supply of water.

7. Extruder according to one of the preceding claims, **characterized in that** the mastification/plasticization zone (4) and the dispersion zone (6) each have a kneading unit comprised of a plurality of kneading disks (41, 42, 43,... or 61, 62, 63,...) rowed in an axial direction.

8. Extruder according to claim 7, **characterized in that** the width B of the kneading disks ranges between about 1/6 of the diameter D and about 1 diameter D of the kneading disks (41, 42, 43,... or 61, 62, 63,...).

9. Extruder according to claim 7 or 8, **characterized in that** the rowed kneading disks (41, 42, 43,... or 61, 62, 63,...) are each offset by 90° relative to each other.

10. Extruder according to claim 7 or 8, **characterized in that** the rowed kneading disks are arranged offset by less than 90° in the rotational direction (returning), or by less than 90° opposite the rotational direction (conveying).

11. Extruder according to one of claims 7 to 10, **characterized in that** the maximum diameter D of the kneading disks (41, 42, 43,... or 41*, 42*, 43*,...) of the mastification segment (4'; 4*) decreases along the product conveying direction.

12. Extruder according to one of claims 7 to 11, **characterized in that** the maximum diameter D of the kneading disks (61, 62, 63,... or 61*, 62*, 63*,...) of the dispersion segment (6'; 6*) decreases along the product conveying direction.

13. Extruder according to one of claims 7 to 10 or claim 12, **characterized in that** the maximum diameter D of the kneading disks (41, 42, 43,... or 41*, 42*, 43*,...) of the mastification segment (4'; 4*) increases along the product conveying direction.

14. Extruder according to one of claims 7 to 11 or claim 13, **characterized in that** the maximum diameter D of the kneading disks (61, 62, 63,... or 61*, 62*, 63*,...) of the dispersion segment (6'; 6*) increases along the product conveying direction.

15. Extruder according to one of the preceding claims, **characterized in that** the diameter of a respective kneading disk (41, 42, 43,... or 41*, 42*, 43*,...; 61, 62, 63,... or 61*, 62*, 63*,...) varies along their width at different axial positions.

16. Extruder according to one of the preceding claims, **characterized in that** the fill-in zone (2) or conveying area is at least as long as the combined lengths of the mastification/plasticization zone (4) and the dispersion zone (6).

17. Extruder according to one of the preceding claims, **characterized in that** the fill-in zone (2) has distributive elements.

18. Extruder according to one of the preceding claims, **characterized in that** the multi-screw extruder is a ring extruder (30) having both a casing and core cooling system (31, 32).

19. Extruder according to one of the preceding claims, **characterized in that** the extruder has a shaping device at its downstream conveying end.

20. Extruder according to claim 19, **characterized in that** a discharge unit is provided between the downstream conveying extruder end and the shaping device.

21. Method for preparing and/or processing an elastomer, in particular rubber, reacted with filler, having at least one softener and/or additives, by means of extruder according to one of claims 1 to 20, wherein the method involves the following steps:
- metering in the elastomer along with the softener and/or additives;
- mastification/plasticization of the product with at least one kneading element, wherein the elastomer with the softener and/or additives is converted into the state of a free-flowing, coherent mixture; and
- dispersion of the product with at least one additional kneading element, wherein the filler is comminuted and distributed in the elastomer,
**characterized in that**
- the screws carrying the kneader elements are operated at speeds ranging from 100 to 300 RPM.

22. Method according to claim 21, **characterized in that** the softener and/or the additives is/are metered in an upstream conveying end area (2a) of the fill-in zone (2).

23. Method according to claim 21, **characterized in that** the softener and/or the additives is/are metered along the product conveying direction distributed over at least a partial area (2a, 2b, 2c) of the fill-in zone (2).

24. Method according to claim 23, **characterized in that** the softener and/or the additives are metered into a downstream conveying partial area (2c) of the fill-in zone (2).

25. Method according to one of claims 21 to 24, **characterized in that** degassing takes place in the area of the mastification/plasticization zone (2) and/or the dispersion zone (4).

26. Method according to one of claims 21 to 25, **characterized in that** metered water is added in the area of the fill-in zone (2).

27. Method according to one of claims 21 to 26 with the use of an extruder according to claim 18,
**characterized in that** both the casing and core of the multi-screw extruder (30) are cooled.

28. Method according to one of claims 21 to 27, **characterized in that** the product is discharged at the downstream conveying end of the extruder.

29. Method according to claim 28, **characterized in that** the product is shaped after discharged.

30. Method according to one of claims 21 to 29, **characterized in that** portions of the additives and/or softener are already integrated in the elastomer to be prepared or processed.

## Revendications

1. Extrudeuse à pluralité d'arbres, comportant au moins deux arbres, pour préparer et/ou traiter un élastomère, notamment du caoutchouc, mélangé avec une matière de charge, avec au moins un plastifiant et/ou des additifs, dans laquelle l'extrudeuse présente en séquence dans la direction de transport du produit :
- une zone de remplissage (2), dans laquelle l'élastomère ainsi que le plastifiant et/ou les additifs est versé, respectivement sont versés ;
- une zone de moulage de plastique/caoutchouc (4) comportant au moins un élément de malaxage (8,10), dans laquelle l'élastomère avec le plastifiant et/ou les additifs est transformé en un mélange cohérent et à haute fluidité (composé) ; et
- une zone de dispersion (6) comportant au moins un élément de malaxage supplémentaire (8,10), dans laquelle la matière de charge est broyée et répartie dans l'élastomère,
**caractérisé en ce que**
- entre le peigne (8a,8b,10a,10b) des éléments de malaxage (8,10) et la paroi intérieure du logement (9) de l'extrudeuse, une fente présentant un écartement des bords Z correspondant à 1/100^{ème} à 1/10^{ème} du diamètre D de l'élément de malaxage est présente, dans laquelle le diamètre est défini comme le diamètre maximal d'un élément de malaxage (8,10) du peigne (8a,10a) au peigne (8b,10b).

2. Extrudeuse selon la revendication 1, **caractérisée en ce qu'**elle fonctionne dans une gamme de vitesses de rotation d'environ 100 révolutions par minute à 300 révolutions par minute.

3. Extrudeuse selon la revendication 1 ou 2, **caractérisée en ce qu'**un dispositif de dosage (12,13) pour verser le plastifiant et/ou les additifs dans la zone d'extrémité (2a) en amont du transport de la zone de remplissage (2) est prévue.

4. Extrudeuse selon une des revendications 1 à 3, **caractérisée en ce que** un dispositif de dosage (12,13,14,15) pour verser le plastifiant et/ou les additifs le long de la direction de transport du produit est prévu et réparti sur au moins une portion (2a, 2b, 2c) de la zone de remplissage (2).

5. Extrudeuse selon une des revendications précédentes, **caractérisée en ce que** la zone de moulage de plastique/caoutchouc (4) et/ou la zone de dispersion (6) présentent respectivement une ouverture de dégazage (16,18).

6. Extrudeuse selon la revendication 5, **caractérisée en ce que** la zone de remplissage (2) ou la zone de transport présentent un dispositif d'introduction dosée de l'eau.

7. Extrudeuse selon une des revendications précédentes, **caractérisée en ce que** la zone de moulage de plastique/caoutchouc (4) ainsi que la zone de dispersion (6) présentent respectivement un bloc de malaxage constitué d'une pluralité de disques pétrisseurs disposés côte à côte dans la direction axiale (41,42,43, ....respectivement 61,62,63,...).

8. Extrudeuse selon la revendication 7, **caractérisée en ce que** la largeur L des disques pétrisseurs dans la zone correspond à environ 1/6^{ème} du diamètre D et à environ 1 diamètre D des disques pétrisseurs (41, 42, 43,..61, 62, 63,..).

9. Extrudeuse selon la revendication 7 ou 8, **caractérisée en ce que** les disques pétrisseurs disposés côte à côte (41,42,43,...61,52,63,...) sont décalés respectivement les uns par rapport aux autres de 90°.

10. Extrudeuse selon la revendication 7 ou 8, **caractérisée en ce que** les disques pétrisseurs disposés côte à côte sont décalés à moins de 90° dans la direction de rotation (sens inverse du transport) et à moins de 90° dans le sens inverse de la direction de rotation (sens du transport).

11. Extrudeuse selon une des revendications 7 à 10, **caractérisée en ce que** le diamètre maximal D des disques pétrisseurs (41,42,43,...41*,42*,43*,...) de la portion de moulage de caoutchouc (4' ;4*) diminue le long de la direction de transport du produit.

12. Extrudeuse selon une des revendications 7 à 11, **caractérisée en ce que** le diamètre maximal D des disques pétrisseurs (61,62,63,...61*,62*,63*,...) de la portion de dispersion (6' ;6*) diminue le long de la direction de transport du produit.

13. Extrudeuse selon une des revendications 7 à 10 ou selon la revendication 12, **caractérisée en ce que** le diamètre maximal D des disques pétrisseurs (41,42,43,...41*,42*,43*,...) de la portion de moulage de caoutchouc (4' ;4*) augmente le long de la direction de transport du produit.

14. Extrudeuse selon une des revendications 7 à 11 ou selon la revendication 13, **caractérisée en ce que** le diamètre maximal D des disques pétrisseurs (61,62,63,...61*,62*,63*,...) de la portion de dispersion (6' ;6*) augmente le long de la direction de transport du produit.

15. Extrudeuse selon une des revendications précédentes, **caractérisée en ce que** le diamètre respectif d'un disque pétrisseur (41, 42, 43,...41*,42*,43*,... ; 61, 62, 63,...61*,62*,63*,...) est différent le long de sa largeur à des positions axiales différentes.

16. Extrudeuse selon une des revendications précédentes, **caractérisée en ce que** la zone de remplissage (2) ou la zone de transport est au moins aussi longue que la somme des longueurs de la zone de moulage de plastique/caoutchouc (4) et la zone de dispersion (6).

17. Extrudeuse selon une des revendications précédentes, **caractérisée en ce que** la zone de remplissage (2) présente des éléments distributifs.

18. Extrudeuse selon une des revendications précédentes, **caractérisée en ce que** l'extrudeuse à pluralité d'arbres est une extrudeuse à douze vis co-rotatives (30), laquelle présente un dispositif de refroidissement du logement ainsi que du coeur (31,32).

19. Extrudeuse selon une des revendications précédentes, **caractérisée en ce que** l'extrudeuse présente sur son extrémité en aval du transport un dispositif de façonnage.

20. Extrudeuse selon la revendication 19, **caractérisée en ce qu'**un extracteur est prévu entre l'extrémité d'extrudeuse en aval du transport et le dispositif de façonnage.

21. Procédé pour préparer et/ou traiter un élastomère, notamment du caoutchouc, mélangé avec une matière de charge, avec un plastifiant et/ou des additifs, au moyen d'une extrudeuse selon une des revendications 1 à 20, lequel procédé comporte les étapes suivantes :
- verser l'élastomère ainsi que le plastifiant et/ou les additifs ;
- mouler le plastique/caoutchouc du produit à l'aide d'au moins un élément de malaxage, moyennant quoi l'élastomère est amené par le plastifiant et/ou les additifs à l'état d'un mélange cohérent et à haute fluidité ; et
- disperser le produit à l'aide d'au moins un élément de malaxage supplémentaire, moyennant quoi la matière de charge dans l'élastomère est broyée et répartie,
**caractérisé par**
- le fonctionnement des arbres qui supportent les éléments de malaxage à des vitesses de rotation comprises entre 100 révolutions par minute et 300 révolutions par minute.

22. Procédé selon la revendication 21, **caractérisé en ce que** le plastifiant et/ou les additifs sont versés sur une zone d'extrémité en amont du transport (2a) de la zone de remplissage (2).

23. Procédé selon la revendication 21, **caractérisé en ce que** le plastifiant et/ou les additifs sont versés et répartis le long de la direction de transport du produit par au moins une portion (2a,2b,2c) de la zone de remplissage (2).

24. Procédé selon la revendication 23, **caractérisé en ce que** le plastifiant et/ou les additifs sont versés dans une portion (2c) de la zone de remplissage (2) en aval du transport.

25. Procédé selon une des revendications 21 à 24, **caractérisé en ce qu'**un dégazage est effectué au niveau de la zone de moulage de plastique/caoutchouc (2) et/ou de la zone de dispersion (4).

26. Procédé selon une des revendications 21 à 25, **caractérisé en ce que** de l'eau dosée est ajoutée au niveau de la zone de remplissage (2).

27. Procédé selon une des revendications 21 à 26 qui utilise une extrudeuse selon la revendication 18, **caractérisé en ce que** autant le logement que le coeur de l'extrudeuse à pluralité d'arbres (30) sont refroidis.

28. Procédé selon une des revendications 21 à 27, **caractérisé en ce que** le produit est extrait à l'extrémité de l'extrudeuse en aval du transport.

29. Procédé selon la revendication 28, **caractérisé en ce qu'**un façonnage du produit est effectué après l'extraction de ce dernier.

30. Procédé selon une des revendications 21 à 29, **caractérisé en ce que** des quantités d'additifs et/ou de plastifiant sont déjà intégrées à l'élastomère à préparer, respectivement à traiter.
